# EUROPEAN PATENT APPLICATION

(11) **EP 4 759 589 A1**
(43) Date of publication of application: **17.06.2026**
(21) Application number: 24867790.8
(22) Date of filing: 20.03.2024
(51) Int. Cl.: B60K 1/04, B60L 15/00, B60L 50/60

(54) **DUMP TRUCK**

(30) Priority: 20.09.2023 JP 2023151848
(71) Applicant: Hitachi Construction Machinery Co., Ltd., Tokyo 110-0015 (JP)
(72) Inventor: NAKATE, Yohei, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); SAIJO, Kimihiro, Tsuchiura-shi, Ibaraki 300-0013 (JP); KANAYA, Yosuke, Tsuchiura-shi, Ibaraki 300-0013 (JP); KIMURA, Takuya, Tsuchiura-shi, Ibaraki 300-0013 (JP); ABE, Yusuke, Tsuchiura-shi, Ibaraki 300-0013 (JP); LI, Zhi, Tsuchiura-shi, Ibaraki 300-0013 (JP); SUZUKI, Shotaro, Tsuchiura-shi, Ibaraki 300-0013 (JP); MURAYAMA, Yuji, Tsuchiura-shi, Ibaraki 300-0013 (JP); HONDA, Takeshi, Tsuchiura-shi, Ibaraki 300-0013 (JP)
(74) Representative: Manitz Finsterwald Patent- und Rechtsanwaltspartnerschaft mbB
(86) International application number: PCT/JP2024/010874
(87) International publication number: WO 2025/062699

(57) **Abstract**

The battery (25) mounted on the vehicle body frame (5) is positioned at the front side part of the vehicle body frame (5), and the DC/DC converter (29) is located between the front wheel (3) and the rear wheel (4) and is positioned on the lateral side of the vehicle body frame (5). The boost reactor (26) is positioned on the rear side of the battery (25) in a state facing the battery (25) in the longitudinal direction, the hydraulic pump drive motor (27) is positioned on the rear side of the boost reactor (26), and the pump drive inverter (28) is positioned on the rear side of the hydraulic pump drive motor (27).

## Description

### TECHNICAL FIELD

The present disclosure relates to dump trucks that are suitably used for transporting crushed materials excavated in open-pit mines, quarries, etc.

### BACKGROUND ART

Generally, in open-pit mines and quarries, hydraulic excavators are used to dig out crushed materials such as minerals, and the excavated large quantities of crushed materials are loaded onto dump trucks and transported to designated unloading sites. Dump trucks are configured with a self-propelled vehicle body equipped with a vehicle body frame to which front and rear wheels are attached, and a load-carrying platform (vessel) mounted to pivot up and down with the rear side of the vehicle body frame as a fulcrum.

Dump trucks are equipped with travel electric motors as power sources to rotationally drive the left and right drive wheels. In recent years, dump trucks equipped with batteries instead of generators driven by engines have been proposed, where the travel electric motor is driven by the power charged in the battery (Patent Document 1).

### PRIOR ART DOCUMENT

### PATENT DOCUMENT

Patent Document 1: US2021/0229583A1

### SUMMARY OF THE INVENTION

However, dump trucks equipped with batteries that store power supplied to travel electric motors also have various electrical equipment other than batteries, such as DC/DC converters and boost reactors. Since these electrical equipment are heavy, they need to be arranged to ensure stability during the dump truck's travel. Additionally, since various electrical equipment mounted on dump trucks are electrically connected via cables, it is necessary to devise cable routing so that the cables connecting these devices do not intersect complexly.

The present invention was made in view of the problems of the prior art described above, and its object is to provide a dump truck in which electrical equipment mounted on the vehicle body frame are arranged to ensure stability during travel.

The present invention provides a dump truck comprising: a vehicle body frame to which front and rear wheels are attached; a battery mounted on the vehicle body frame and configured to store power; a DC/DC converter configured to control the power and voltage charged and discharged to the battery; a boost reactor configured to boost the voltage discharged from the battery and smooth the power charged to the battery; an electric motor configured to drive a hydraulic pump mounted on the vehicle body frame; and an inverter configured to control the power supplied to the electric motor. The battery is arranged at the front side of the vehicle body frame where the front wheels are attached. The DC/DC converter is positioned between the front and rear wheels and arranged on one side of the vehicle body frame in the lateral direction. The boost reactor is arranged at the rear side of the battery and opposed to the battery in the longitudinal direction. The electric motor is arranged at the rear side of the boost reactor and opposed to the DC/DC converter in the lateral direction. The inverter is arranged at the rear side of the electric motor and opposed to the DC/DC converter in the lateral direction.

According to the present invention, since heavy electrical equipment such as batteries, boost reactors, electric motors, and inverters are arranged in the longitudinal direction of the vehicle body frame, it is easy to adjust the weight balance of the entire vehicle body, ensuring stability during travel.

### BRIEF DESCRIPTION OF THE DRAWINGS

[FIG. 1] is left side view illustrating a dump truck to which the embodiment of the present invention is applied.
[FIG. 2] is perspective view showing the vehicle body frame alone.

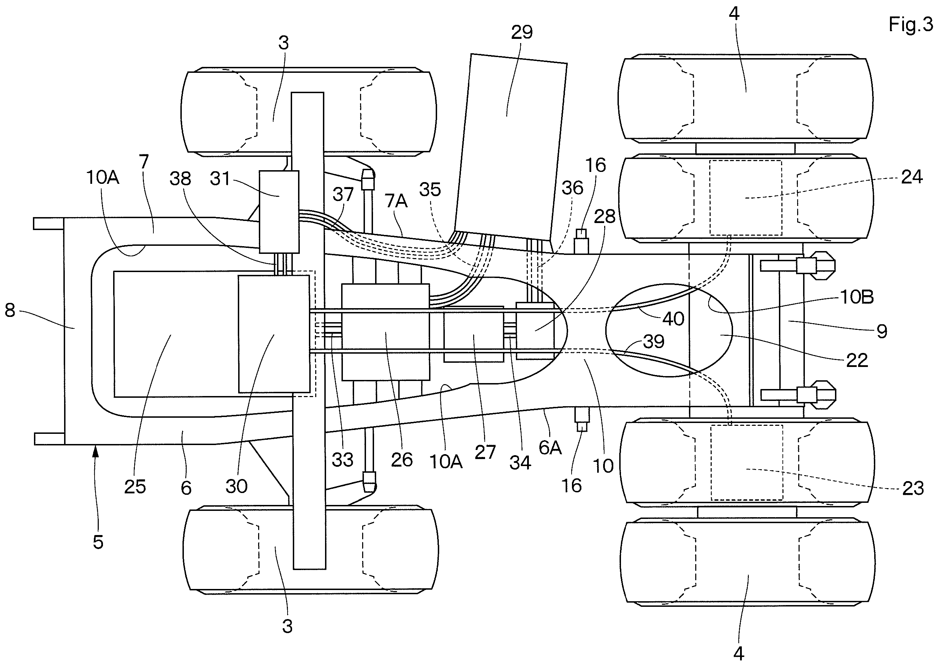

[FIG. 3] is plan view showing the arrangement of electrical equipment mounted on the vehicle body frame.
[FIG. 4] is system configuration diagram schematically illustrating various systems mounted on the dump truck.

### MODE FOR CARRYING OUT THE INVENTION

Below, an embodiment of the present invention will be described in detail with reference to the accompanying drawings, taking a trolley-type dump truck as an example. In the embodiment, the traveling direction of the dump truck is described as the longitudinal direction, and the direction orthogonal to the traveling direction is described as the lateral direction.

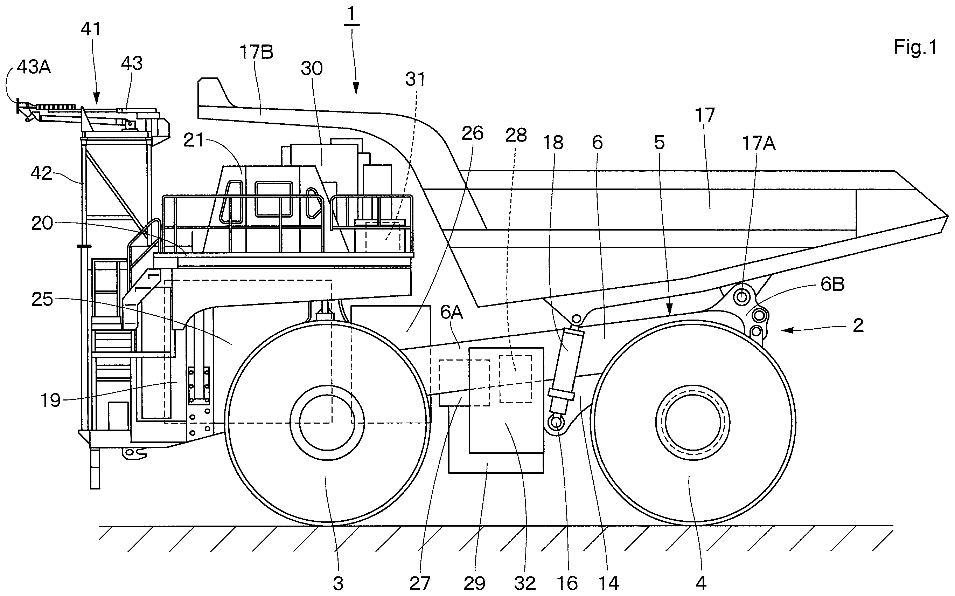

In FIG. 1, the trolley-type dump truck 1 travels by supplying power from trolley overhead wires installed in mines, etc., to the travel electric motor via a current collector (trolley). The dump truck 1 is configured with a self-propelled vehicle body 2 equipped with left and right front wheels 3 and left and right rear wheels 4, and a load-carrying platform 17 mounted on the vehicle body 2 to tilt (rise and fall), and transports minerals excavated by hydraulic excavators, etc. (not shown) loaded onto the load-carrying platform 17. The vehicle body 2 of the dump truck 1 is configured to include a vehicle body frame 5, deck 20, cab 21, etc., as described later.

The left and right front wheels 3 are rotatably provided at the front side of the vehicle body 2, constituting steering wheels. The front wheels 3 are supported by the vehicle body frame 5 via front wheel suspension (not shown), and vibrations transmitted from the front wheels 3 to the vehicle body 2 are mitigated. The left and right rear wheels 4 are rotatably provided at the rear side of the vehicle body 2 and are rotationally driven by electric motors (referred to as left travel motor 23 and right travel motor 24, or travel electric motors) described later. The rear wheels 4 are attached to the vehicle body frame 5 via rear wheel suspension (not shown), and vibrations transmitted from the rear wheels 4 to the vehicle body 2 are mitigated.

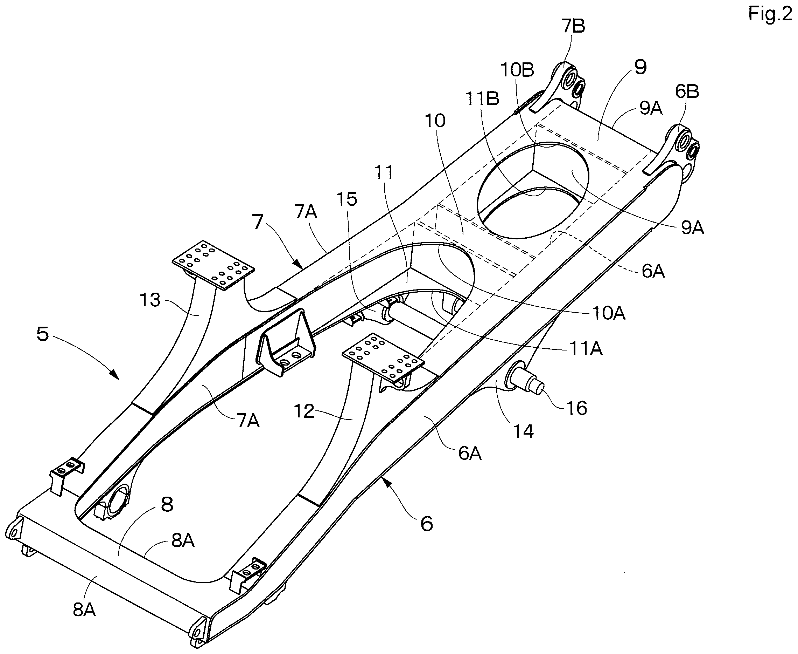

The vehicle body frame 5 serves as the base of the vehicle body 2 and consists of a robust support structure extending in the longitudinal direction. As shown in FIG. 2, the vehicle body frame 5 is configured to include a left frame 6, right frame 7, front frame 8, rear frame 9, upper plate 10, lower plate 11, etc., as described later.

The left frame 6 is arranged on the left side of the vehicle body frame 5. The left frame 6 is configured to include left and right side plates 6A facing each other in the lateral direction, an upper plate 10 closing the upper ends of the left and right side plates 6A, and a lower plate 11 connecting the lower ends of the left and right side plates 6A, and has a box structure with a square cross-section extending in the longitudinal direction. The right frame 7 is arranged on the right side of the vehicle body frame 5. The right frame 7 is configured to include left and right side plates 7A facing each other in the lateral direction, an upper plate 10 closing the upper ends of the left and right side plates 7A, and a lower plate 11 connecting the lower ends of the left and right side plates 7A, and has a box structure with a square cross-section extending in the longitudinal direction.

The left frame 6 and right frame 7 extend in the longitudinal direction while facing each other with a gap in the lateral direction, and the lateral gap between the left frame 6 and right frame 7 is set larger at the front side compared to the rear side of the vehicle body frame 5. A left rear-end bracket 6B is provided at the rear end of the left frame 6, and a right rear-end bracket 7B is provided at the rear end of the right frame 7, and these left rear-end bracket 6B and right rear-end bracket 7B face each other in the lateral direction.

The front frame 8 is arranged at the front side of the vehicle body frame 5. The front frame 8 is configured to include front and rear side plates 8A facing each other in the longitudinal direction, an upper plate 10, and a lower plate 11, and has a box structure extending in the lateral direction, connecting the front end of the left frame 6 and the front end of the right frame 7. The rear frame 9 is arranged at the rear side of the vehicle body frame 5. The rear frame 9 is configured to include front and rear side plates 9A facing each other in the longitudinal direction, an upper plate 10, and a lower plate 11, and has a box structure extending in the lateral direction, connecting the rear end of the left frame 6 and the rear end of the right frame 7.

The upper plate 10 is provided at the upper ends of the left frame 6, right frame 7, front frame 8, and rear frame 9. The upper plate 10 closes the upper ends of the left frame 6, right frame 7, front frame 8, and rear frame 9, and connects between the left frame 6 and right frame 7. The upper plate 10 is provided with a front opening 10A and a rear opening 10B positioned between the left frame 6 and right frame 7.

The lower plate 11 is provided at the lower ends of the left frame 6, right frame 7, front frame 8, and rear frame 9, facing the upper plate 10 in the vertical direction. The lower plate 11 closes the lower ends of the left frame 6, right frame 7, front frame 8, and rear frame 9, and connects between the left frame 6 and right frame 7. The lower plate 11 is provided with a front opening 11A and a rear opening 11B at positions corresponding to the front opening 10A and rear opening 10B of the upper plate 10.

The left pillar 12 and right pillar 13 are provided at positions closer to the front side from the central part in the longitudinal direction of the vehicle body frame 5, facing each other in the lateral direction. The left pillar 12 and right pillar 13 each have a hollow box structure shaped like a mountain. The left pillar 12 is protruded upward from the upper plate 10 constituting the left frame 6, and the right pillar 13 is protruded upward from the upper plate 10 constituting the right frame 7. A deck 20, etc., is attached to the upper ends of the left pillar 12 and right pillar 13.

The left cylinder bracket 14 and right cylinder bracket 15 are provided at positions closer to the rear side from the intermediate part in the longitudinal direction of the vehicle body frame 5, facing each other in the lateral direction. The left cylinder bracket 14 protrudes downward from the lower plate 11 constituting the left frame 6, and the right cylinder bracket 15 protrudes downward from the lower plate 11 constituting the right frame 7. A cylinder support shaft 16 extending in the lateral direction is inserted at the lower end side of the left cylinder bracket 14 and right cylinder bracket 15. The lower end side of the hoist cylinder 18 described later is attached to both ends in the lateral direction of the cylinder support shaft 16.

The load-carrying platform (vessel) 17 is mounted on the vehicle body frame 5 to be tiltable (able to rise and fall). The load-carrying platform 17 is formed as a large container with a bottom for loading minerals excavated by hydraulic excavators, etc. The rear bottom of the load-carrying platform 17 is tiltably connected via a connecting pin 17A to the left rear end bracket 6B of the left frame 6 and the right rear end bracket 7B of the right frame 7. At the front side of the load-carrying platform 17, an eave portion 17B extends horizontally forward from the top. The eave portion 17B of the load-carrying platform 17 extends to the front end side of the deck 20, covering the cab 21 from above.

The hoist cylinder 18 is provided in pairs in the lateral direction between the vehicle body frame 5 and the load-carrying platform 17 (only the right side is shown). The hoist cylinder 18 consists of a hydraulic cylinder, for example, and tilts the front side of the load-carrying platform 17 up and down relative to the vehicle body frame 5. One end (lower end) of the hoist cylinder 18 is attached to the cylinder support shaft 16, and the other end (upper end) is attached to the underside of the load-carrying platform 17. Therefore, by extending the hoist cylinder 18, the front side (eave portion 17B side) of the load-carrying platform 17 is lifted upward around the connecting pin 17A, allowing minerals loaded on the load-carrying platform 17 to be discharged to the rear.

A front support member 19 is provided at the front end side of the vehicle body frame 5. The front support member 19 is formed in a frame shape surrounded by left and right side panels and a front panel (grille), and inside the front support member 19, a battery 25 and other components described later are housed. The front support member 19, along with the left pillar 12 and right pillar 13 of the vehicle body frame 5, also serves to support the deck 20 and other components from below.

The deck 20 is positioned in front of the load-carrying platform 17 and is provided on the upper side of the front support member 19. The deck 20 is formed in a long rectangular flat shape in the lateral direction and extends horizontally, supported from below by the left pillar 12, right pillar 13, and the front support member 19 of the vehicle body frame 5. On the deck 20, the cab 21 and a control cabinet 30 described later are mounted, and the upper surface of the deck 20 serves as a flat passageway for operators and others.

The cab 21 is provided on the upper left side of the deck 20, defining the operating room where the operator boards. Inside the cab 21, there are an operator's seat, a steering handle, a start switch, an accelerator pedal, a brake pedal, and control levers (none of which are shown).

At the rear side of the vehicle body frame 5, an axle housing 22 for the rear wheels is provided. The axle housing 22 consists of a cylindrical body extending in the lateral direction and is attached to the vehicle body frame 5 via a suspension device for the rear wheels (not shown) . At the left end side of the axle housing 22, a left travel motor 23 consisting of an electric motor is provided, and at the right end side, a right travel motor 24 consisting of an electric motor is provided. These left travel motor 23 and right travel motor 24 rotate using power supplied from the battery 25 or trolley overhead wire, driving the left and right rear wheels 4.

The battery 25 is located below the deck 20 and mounted on the front side part of the vehicle body frame 5. The battery 25 stores power supplied to electrical equipment mounted on the dump truck 1, such as the left travel motor 23 and right travel motor 24. Here, the battery 25 is positioned between the left frame 6 and right frame 7 that constitute the vehicle body frame 5 and is attached to the vehicle body frame 5 via anti-vibration mounts (not shown).

The boost reactor 26 is located behind the battery 25 and mounted on the vehicle body frame 5. The boost reactor 26 is electrically connected between the battery 25 and a DC/DC converter 29 described later. The boost reactor 26 has the function of protecting the battery 25 by boosting the battery voltage during discharge and preventing overcurrent during charging to smooth the power. The boost reactor 26 is adjacent to the rear side of the battery 25, facing the battery 25 in the longitudinal direction, and is mounted on the vehicle body frame 5 positioned between the left frame 6 and right frame 7.

The electric motor for driving the hydraulic pump 56 (hereinafter referred to as the hydraulic pump drive motor 27 or the first electric motor) is mounted on the vehicle body frame 5 adjacent to the rear side of the boost reactor 26. The hydraulic pump drive motor 27 consists of an electric motor and drives the hydraulic pump 56 described later using power from the battery 25. This allows hydraulic fluid from the hydraulic pump 56 to be supplied to hydraulic equipment such as the hoist cylinder 18 and power steering device (not shown) . The hydraulic pump drive motor 27 is mounted on the vehicle body frame 5, facing the DC/DC converter 29 in the lateral direction, and positioned between the left frame 6 and right frame 7.

The inverter used for controlling the operation of the hydraulic pump drive motor 27 (hereinafter referred to as the pump drive inverter 28 or the first inverter) is mounted on the vehicle body frame 5 adjacent to the rear side of the hydraulic pump drive motor 27. The pump drive inverter 28 controls the power supplied to the hydraulic pump drive motor 27 and controls the operation of the hydraulic pump drive motor 27. The pump drive inverter 28 is mounted on the vehicle body frame 5, facing the DC/DC converter 29 in the lateral direction, and positioned between the left frame 6 and right frame 7.

In this embodiment, the battery 25, boost reactor 26, hydraulic pump drive motor 27, and pump drive inverter 28 are arranged longitudinally between the left frame 6 and right frame 7, which constitute the vehicle body frame 5, and are positioned inside the front openings 10A of the upper plate 10 and 11A of the lower plate 11. Thus, by positioning the heavy components such as the battery 25, boost reactor 26, hydraulic pump drive motor 27, and pump drive inverter 28 centrally between the left frame 6 and right frame 7, the stability of the dump truck 1 during travel is enhanced. Furthermore, even if the dump truck 1 overturns while traveling on uneven ground such as a mine, the battery 25 and other components are positioned between the highly rigid left frame 6 and right frame 7, preventing damage to the battery 25 and others.

The DC/DC converter 29 is mounted on the vehicle body frame 5, positioned between the right front wheel 3 and rear wheel 4. Specifically, the DC/DC converter 29 is attached to the right side plate 7A (right side of the vehicle body frame 5) of the right frame 7, positioned between the right front wheel 3 and rear wheel 4. The DC/DC converter 29 controls the power and voltage during charging and discharging by the battery 25.

The control cabinet 30 is mounted on the deck 20, adjacent to the right side of the cab 21. Inside the control cabinet 30, the AC drive system 46, which drives the left travel motor 23 and right travel motor 24, is housed. The rotation of the left travel motor 23 and right travel motor 24 is individually controlled by the AC drive system 46.

The DC reactor 31 is mounted on the deck 20, positioned in front of the DC/DC converter 29 and adjacent to the right side of the control cabinet 30. The DC reactor 31 blocks high-frequency currents during battery 25 discharge and smooths the current supplied from the battery 25 to the left travel motor 23 and right travel motor 24.

The hydraulic fluid tank 32 is attached to the left frame 6, opposite the right frame 7 where the DC/DC converter 29 is mounted, which constitutes the vehicle body frame 5. The hydraulic fluid tank 32 is positioned between the left front wheel 3 and rear wheel 4, attached to the left side plate 6A of the left frame 6, storing hydraulic fluid supplied to hydraulic equipment such as the hoist cylinder 18 mounted on the vehicle body frame 5.

Cable 33 electrically connects the battery 25 and boost reactor 26. Cable 33 is connected at one end to the battery 25 and at the other end to the boost reactor 26, extending linearly in the longitudinal direction between the left frame 6 and right frame 7 of the vehicle body frame 5. In this case, the boost reactor 26 is positioned adjacent to the rear side of the battery 25, facing it longitudinally, allowing the length of cable 33 to be minimized.

Cable 34 electrically connects the hydraulic pump drive motor 27 and pump drive inverter 28. Cable 34 is connected at one end to the hydraulic pump drive motor 27 and at the other end to the pump drive inverter 28, extending linearly in the longitudinal direction between the left frame 6 and right frame 7 of the vehicle body frame 5. In this case, the pump drive inverter 28 is positioned adjacent to the rear side of the hydraulic pump drive motor 27, facing it longitudinally, allowing the length of cable 34 to be minimized.

Cable 35 electrically connects the boost reactor 26 and DC/DC converter 29. Cable 35 is connected at one end to the boost reactor 26 and at the other end to the DC/DC converter 29, extending laterally through the underside of the right frame 7, which constitutes the vehicle body frame 5. In this case, the boost reactor 26 is positioned between the left frame 6 and right frame 7, which constitute the vehicle body frame 5, and the DC/DC converter 29 is attached to the right side of the right frame 7. Therefore, cable 35 connects the boost reactor 26 and DC/DC converter 29, extending almost linearly laterally through the underside of the right frame 7, allowing the length of cable 35 to be minimized.

Cable 36 electrically connects the pump drive inverter 28 and DC/DC converter 29. Cable 36 is connected at one end to the pump drive inverter 28 and at the other end to the DC/DC converter 29, extending laterally through the underside of the right frame 7. In this case, the pump drive inverter 28 is positioned between the left frame 6 and right frame 7, and the DC/DC converter 29 is attached to the right side of the right frame 7. Therefore, cable 36 connects the pump drive inverter 28 and DC/DC converter 29, extending linearly laterally through the underside of the right frame 7, allowing the length of cable 36 to be minimized.

Cable 37 electrically connects the DC/DC converter 29 and DC reactor 31. Cable 37 is connected at one end to the DC reactor 31 and at the other end to the DC/DC converter 29, extending longitudinally through the underside of the right frame 7. In this case, the DC reactor 31 is mounted on the deck 20, positioned in front of the DC/DC converter 29. Thus, cable 37 connects the DC/DC converter 29 and DC reactor 31, extending almost linearly longitudinally through the underside of the right frame 7, allowing the length of cable 37 to be minimized.

Cable 38 electrically connects the control cabinet 30 and DC reactor 31. Cable 38 is connected at one end to the control cabinet 30 and at the other end to the DC reactor 31, extending linearly laterally. In this case, the DC reactor 31 is mounted on the deck 20, adjacent to the right side of the control cabinet 30, allowing the length of cable 38 to be minimized.

Cable 39 is connected at one end to the control cabinet 30 and at the other end to the left travel motor 23, electrically connecting the control cabinet 30 and left travel motor 23. Cable 40 is connected at one end to the control cabinet 30 and at the other end to the right travel motor 24, electrically connecting the control cabinet 30 and right travel motor 24. These cables 39, 40 extend longitudinally through the underside of the lower plate 11, which constitutes the vehicle body frame 5.

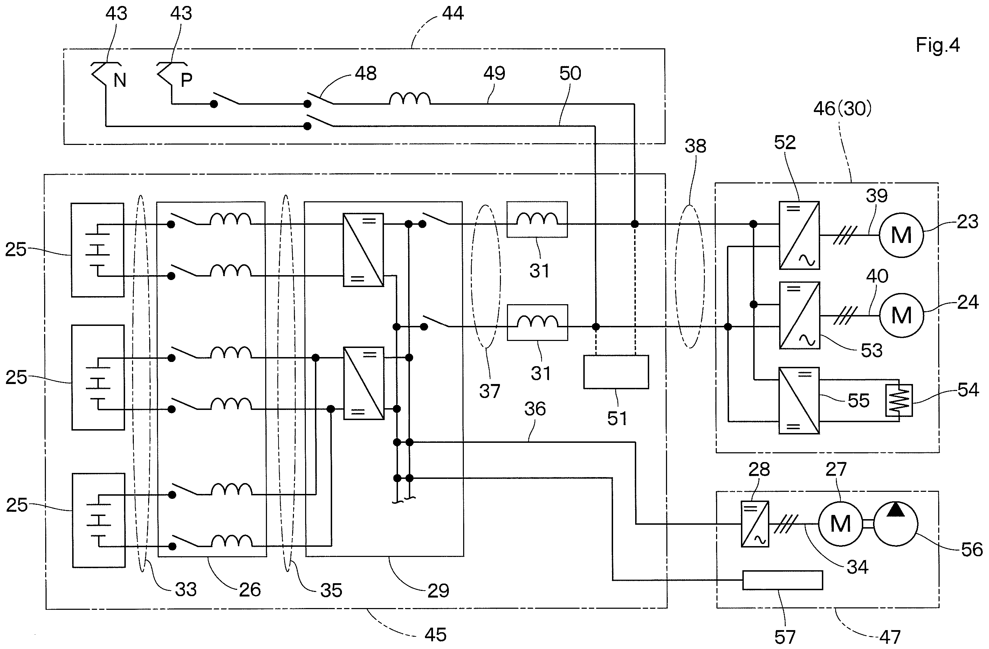

The current collector 41 is provided on the pantograph support 42 mounted at the front end of the vehicle body frame 5 (see FIG. 1). The current collector 41 gathers power from trolley overhead wires installed along the travel path of the dump truck 1 in mines, etc., and supplies it to the left travel motor 23, right travel motor 24, battery 25, and others. The current collector 41 includes a pantograph 43, which is extendably provided between the pantograph support 42 and trolley overhead wires, and a collector shoe 43A that slides against the trolley overhead wires when the pantograph 43 extends. As shown in FIG. 4, the pantograph 43 pairs laterally with one corresponding to the neutral side (N side) trolley overhead wire and one corresponding to the positive side (P side) trolley overhead wire.

Next, the schematic system configuration for driving the trolley-type dump truck 1 will be explained with reference to FIG. 4.

The system for driving the dump truck 1 includes the trolley system 44 positioned at the front of the vehicle body 2, the battery system 45 mounted on the vehicle body frame 5, the AC drive system 46 housed within the control cabinet 30, and the vehicle system 47.

The trolley system 44 supplies power from trolley overhead wires installed in mines, etc., to the left travel motor 23 and right travel motor 24. The trolley system 44 includes the N side and P side pantographs 43 that contact the trolley overhead wires to gather power, and cables 49, 50 connected to the pantographs 43 via the trolley switch 48. Cables 49, 50 are connected to cable 38, which connects the control cabinet 30 (the travel inverter or second and third inverters 52, 53 mentioned later) and the DC reactor 31.

The battery system 45 stores electrical energy and supplies the stored power to the left travel motor 23 and right travel motor 24. The battery system 45 is composed of the battery 25, the boost reactor 26 connected to the battery 25 via cable 33, the DC/DC converter 29 connected to the boost reactor 26 via cable 35, and the DC reactor 31 connected to the DC/DC converter 29 via cable 37. Additionally, the battery system 45 is equipped with a charging port 51, allowing power from charging facilities installed away from the trolley overhead wires (not shown) to be supplied to the battery 25 via the charging port 51.

The AC drive system 46 is housed within the control cabinet 30 and controls the left travel motor 23 and right travel motor 24 to ensure stable operation of the dump truck 1. The AC drive system 46 is configured with an inverter (second inverter) 52 that controls the rotation of the left travel motor 23, an inverter (third inverter) 53 that controls the rotation of the right travel motor 24, and an electric brake resistor 54. The electric brake resistor 54 consumes regenerative power by converting it into thermal energy when the dump truck 1 travels downhill, with the power generated by the left travel motor 23 and right travel motor 24 being supplied via the chopper 55.

The vehicle system 47 controls auxiliary power devices necessary for the operation of the dump truck 1. The vehicle system 47 is configured with a hydraulic pump 56 that supplies hydraulic fluid to hydraulic equipment such as the hoist cylinder 18 and power steering device (not shown), a hydraulic pump drive motor 27 that drives the hydraulic pump 56, a pump drive inverter 28 that controls the operation of the hydraulic pump drive motor 27, and vehicle control 57. Vehicle control 57 controls the power supplied to devices such as the body control controller, air conditioning device, and lights (all not shown).

The dump truck 1 according to this embodiment has the aforementioned configuration, and the following describes the operation of transporting minerals excavated in a mine using the dump truck 1.

The dump truck 1 loads minerals excavated by a hydraulic excavator onto the load-carrying platform 17 in the loading area and transports them to a dumping area located away from the loading area for unloading. Generally, the loading area and dumping area are flat roads, and the dumping area is set at a higher position than the loading area. Therefore, the travel path from the loading area to the dumping area becomes an uphill road. The dump truck 1 drives the left travel motor 23 and right travel motor 24 with power from the trolley overhead wire when traveling uphill, and with power from the battery 25 when traveling on flat roads.

First, the dump truck 1 loads minerals excavated by a hydraulic excavator (not shown) onto the load-carrying platform 17 in the loading area. Since the loading area is usually on a flat road that does not require large power, the left travel motor 23 and right travel motor 24 are driven by power from the battery 25. That is, power from the battery 25 is supplied to the left travel motor 23 and right travel motor 24 via the boost reactor 26, DC/DC converter 29, DC reactor 31, and inverters 52, 53 in the control cabinet 30.

Additionally, power from the battery 25 is supplied to the hydraulic pump drive motor 27 via the pump drive inverter 28 and to the vehicle control 57. This controls the auxiliary power devices necessary for the operation of the dump truck 1, supplying hydraulic fluid to hydraulic equipment such as the power steering device. Furthermore, vehicle control 57 supplies power to the body control controller, air conditioning device , lights, etc. Thus, the dump truck 1 travels on the flat road within the loading area with the rotation of the left travel motor 23 controlled by inverter 52 and the rotation of the right travel motor 24 controlled by inverter 53.

When the dump truck 1 approaches the uphill road from the flat road, the pantograph 43 of the current collector 41 provided at the front end of the vehicle body frame 5 is extended, allowing the current collector shoe 43A of the pantograph 43 to make sliding contact with the trolley overhead wire installed on the uphill road. As a result, power from the trolley overhead wire is supplied to the left travel motor 23 and the right travel motor 24 via the inverters 52, 53 in the control cabinet 30. Consequently, the rotation of the left travel motor 23 is controlled by the inverter 52, and the rotation of the right travel motor 24 is controlled by the inverter 53, enabling the dump truck 1 to travel uphill towards the unloading area.

At this time, power supplied from the trolley overhead wire is also supplied to the battery 25 via the DC reactor 31, DC/DC converter 29, and boost reactor 26, charging the battery 25. Additionally, part of the power supplied to the battery 25 is supplied to the hydraulic pump drive motor 27 via the pump drive inverter 28 and to the vehicle control 57.

When the dump truck 1 traveling uphill reaches the dumping area, it travels within the dumping area using power from the battery 25 since the dumping area is a flat road. The dump truck 1 that has reached the dumping area extends the hoist cylinder 18 using the hydraulic pump drive motor 27. This allows the load-carrying platform 17 to tilt via the connecting pin 17A, enabling the minerals loaded on the load-carrying platform 17 to be released into the dumping area.

After releasing the minerals loaded on the load-carrying platform 17 into the dumping area, the dump truck 1 travels towards the loading area to load new minerals. Since the dumping area is at a higher position than the loading area, the travel path from the dumping area to the loading area becomes a downhill road. Since large power is not required on the downhill road, the dump truck 1 drives the left travel motor 23 and right travel motor 24 with power from the battery 25.

Here, when the dump truck 1 travels downhill, the left travel motor 23 and right travel motor 24 generate power (regenerative power). If this regenerative power becomes surplus power for the battery 25, it is supplied to the electric brake resistor 54 via the chopper 55 in the control cabinet 30, where it is converted from electrical energy to thermal energy and consumed.

In this way, the dump truck 1 travels between the loading area and dumping area, appropriately selecting power from the trolley overhead wire and battery 25 according to the road surface. The dump truck 1 repeatedly transports minerals loaded on the load-carrying platform 17 in the loading area to the dumping area and releases them there.

The dump truck 1 according to this embodiment has a vehicle body frame 5, which serves as the base of the vehicle body 2, with a left frame 6 and right frame 7 extending in the longitudinal direction while spaced apart in the lateral direction. The battery 25, boost reactor 26, hydraulic pump drive motor 27, and pump drive inverter 28 are arranged in the longitudinal direction, sandwiched between the left frame 6 and right frame 7 of the vehicle body frame 5. By arranging heavy electrical equipment such as the battery 25, boost reactor 26, hydraulic pump drive motor 27, and pump drive inverter 28 in the longitudinal direction at the central part of the vehicle body frame 5 in the lateral direction, the stability of the dump truck 1 during travel can be enhanced. Moreover, even if the dump truck 1 overturns while traveling on rough terrain such as a mine, the battery 25 is placed between the left frame 6 and right frame 7 of the vehicle body frame 5, which has high rigidity, preventing damage to the battery 25.

Additionally, electrical equipment such as the battery 25, boost reactor 26, DC/DC converter 29, and DC reactor 31 mounted on the dump truck 1 are attached to the vehicle body frame 5 independently without being unitized. Therefore, even if changes in battery 25 capacity, changes in power specifications of auxiliary power devices necessary for the operation of the dump truck 1, or changes in specification voltage are required, the electrical equipment corresponding to these specification changes can be individually and easily replaced.

Additionally, the boost reactor 26 is positioned adjacent to the rear side of the battery 25, facing the battery 25 in the longitudinal direction, and the connection between the battery 25 and the boost reactor 26 is electrically established through a cable 33 that extends linearly in the longitudinal direction between the left frame 6 and the right frame 7. As a result, the length of cable 33 can be shortened, reducing the number of fixtures for cable 33 and enhancing the workability when routing cable 33.

Furthermore, the pump drive inverter 28 is positioned adjacent to the rear side of the hydraulic pump drive motor 27, facing the DC/DC converter 29 in the lateral direction. Therefore, the hydraulic pump drive motor 27 and the pump drive inverter 28 are electrically connected through a cable 34 that extends linearly in the longitudinal direction between the left frame 6 and the right frame 7. Additionally, the connection between the DC/DC converter 29 and the pump drive inverter 28 is electrically established through a cable 36 that extends laterally along the underside of the right frame 7. As a result, by shortening the lengths of cables 34 and 36 and reducing their fixtures, the workability when routing cables 34 and 36 can be enhanced.

Additionally, the boost reactor 26 is positioned between the left frame 6 and the right frame 7 of the vehicle body frame 5, and the DC/DC converter 29 is mounted on the right side plate 7A of the right frame 7. Therefore, the connection between the boost reactor 26 and the DC/DC converter 29 is electrically established through a cable 35 that extends almost linearly in the lateral direction along the underside of the right frame 7. As a result, by shortening the length of cable 35 and reducing its fixtures, the workability when routing cable 35 can be enhanced.

Additionally, the DC reactor 31 is mounted on the deck 20 in front of the DC/DC converter 29. Therefore, the connection between the DC/DC converter 29 and the DC reactor 31 is electrically established through a cable 37 that extends almost linearly in the longitudinal direction along the underside of the right frame 7. As a result, by shortening the length of cable 37 and reducing its fixtures, the workability when routing cable 37 can be enhanced.

Furthermore, the DC reactor 31 is mounted on the deck 20 adjacent to the right side of the control cabinet 30. Therefore, the connection between the DC reactor 31 and the control cabinet 30 is electrically established through a cable 38 that extends linearly in the lateral direction. As a result, by shortening the length of cable 38 and reducing its fixtures, the workability when routing cable 38 can be enhanced.

Thus, in this embodiment, the dump truck 1 can minimize the lengths of cable 33 connecting the battery 25 and the boost reactor 26, cable 34 connecting the hydraulic pump drive motor 27 and the pump drive inverter 28, cable 35 connecting the DC/DC converter 29 and the boost reactor 26, cable 36 connecting the DC/DC converter 29 and the pump drive inverter 28, cable 37 connecting the DC/DC converter 29 and the DC reactor 31, and cable 38 connecting the control cabinet 30 and the DC reactor 31. This prevents cables 33 to 38 from contacting and rubbing against each other during the operation of dump truck 1, thereby enhancing the durability of cables 33 to 38.

Thus, the dump truck 1 according to the embodiment includes a vehicle body frame 5 to which the front wheels 3 and rear wheels 4 are attached, a battery 25 mounted on the vehicle body frame 5 to store power, a DC/DC converter 29 to control the power and voltage charged and discharged to the battery 25, a boost reactor 26 to boost the voltage discharged from the battery 25 and smooth the power charged to the battery 25, a hydraulic pump drive motor 27 to drive the hydraulic pump 56 mounted on the vehicle body frame 5, and a pump drive inverter 28 to control the power supplied to the hydraulic pump drive motor 27. The battery 25 is positioned at the front side of the vehicle body frame 5 where the front wheels 3 are mounted, the DC/DC converter 29 is positioned between the front wheels 3 and rear wheels 4 on one lateral side of the vehicle body frame 5, the boost reactor 26 is positioned adjacent to the rear side of the battery 25 facing the battery 25 in the longitudinal direction, the hydraulic pump drive motor 27 is positioned adjacent to the rear side of the boost reactor 26 facing the DC/DC converter 29 in the lateral direction, and the pump drive inverter 28 is positioned adjacent to the rear side of the hydraulic pump drive motor 27 facing the DC/DC converter 29 in the lateral direction.

According to this configuration, the battery 25, boost reactor 26, hydraulic pump drive motor 27, and pump drive inverter 28 are mounted on the vehicle body frame 5 in a longitudinally aligned manner, enhancing the stability of dump truck 1 during travel. Moreover, electrical equipment such as the battery 25, boost reactor 26, DC/DC converter 29, and DC reactor 31 are mounted independently on the vehicle body frame 5 without being unitized. As a result, if a specification change of electrical equipment such as changing the capacity of battery 25 is required, the corresponding electrical equipment can be individually and easily replaced.

In the embodiment, a DC reactor 31 is provided to smooth the current discharged from the battery 25, and the DC reactor 31 is positioned in front of the DC/DC converter 29. According to this configuration, the connection between the DC/DC converter 29 and the DC reactor 31 can be electrically established through a cable 37 that extends almost linearly in the longitudinal direction. As a result, the length of cable 37 can be minimized, enhancing the workability when routing cable 37.

In the embodiment, the vehicle body frame 5 has a left frame 6 and a right frame 7 that extend longitudinally while facing each other with a gap in the lateral direction, and the battery 25, boost reactor 26, hydraulic pump drive motor 27, and pump drive inverter 28 are arranged in a longitudinally aligned manner between the left frame 6 and the right frame 7. According to this configuration, heavy components such as the battery 25, boost reactor 26, hydraulic pump drive motor 27, and pump drive inverter 28 are arranged in a longitudinally aligned manner at the central part in the lateral direction of the vehicle body frame 5, further enhancing the stability of dump truck 1 during travel. Moreover, by positioning the battery 25 between the left frame 6 and the right frame 7 of the vehicle body frame 5, which has high rigidity, damage to the battery 25 can be prevented even if dump truck 1 overturns.

In the embodiment, the connection between the battery 25 and the boost reactor 26, and between the hydraulic pump drive motor 27 and the pump drive inverter 28, is established through cables 33 and 34 that extend longitudinally between the left frame 6 and the right frame 7. According to this configuration, cable 33 connects the battery 25 and the boost reactor 26 in a linearly extended state in the longitudinal direction, and cable 34 connects the hydraulic pump drive motor 27 and the pump drive inverter 28 in a linearly extended state in the longitudinal direction. As a result, the lengths of cables 33 and 34 can be minimized, enhancing the workability when routing cables 33 and 34.

In the embodiment, the connection between the DC/DC converter 29 and the boost reactor 26, and between the DC/DC converter 29 and the pump drive inverter 28, is established through cables 35 and 36 that extend laterally along the underside of the vehicle body frame 5. According to this configuration, cable 35 connects the DC/DC converter 29 and the boost reactor 26 in a nearly linearly extended state in the lateral direction, and cable 36 connects the DC/DC converter 29 and the pump drive inverter 28 in a linearly extended state in the lateral direction. As a result, the lengths of cables 35 and 36 can be minimized, enhancing the workability when routing cables 35 and 36.

In the embodiment, the case where the DC/DC converter 29 is mounted on the right frame 7 constituting the vehicle body frame 5 is illustrated. However, the present invention is not limited to this, and for example, the DC/DC converter may be mounted on the left frame 6 of the vehicle body frame 5, and the hydraulic fluid tank may be mounted on the right frame 7.

Additionally, in the embodiment, a trolley-type dump truck 1 equipped with a current collector 41 is illustrated. However, the present invention is not limited to this and can also be applied to dump trucks that drive the left travel motor 23 and right travel motor 24 solely with power supplied from the battery 25.

### DESCRIPTION OF REFERENCE NUMERALS

1:dump truck
3:front wheel
4:rear wheel
5:vehicle body frame
6:left frame
7:right frame
25:battery
26:boost reactor
27:hydraulic pump drive motor
28:pump drive inverter
29:DC/DC converter
31:DC reactor
33,34,35,36,37,38,39,40,49,50:cable

## Claims

1. A dump truck comprising:
a vehicle body frame to which front and rear wheels are attached;
a battery mounted on the vehicle body frame and configured to store electric power;
a DC/DC converter configured to control the power and voltage charged and discharged to the battery;
a boost reactor configured to boost the voltage discharged from the battery and smooths the power charged to the battery;
an electric motor configured to drive a hydraulic pump mounted on the vehicle body frame; and
an inverter configured to control the power supplied to the electric motor, wherein
the battery is positioned at the front side part of the vehicle body frame where the front wheels are attached,
the DC/DC converter is provided between the front and rear wheels and positioned on one side of the vehicle body frame in the lateral direction,
the boost reactor is positioned behind the battery and opposed to the battery in the longitudinal direction,
the electric motor is positioned behind the boost reactor and opposed to the DC/DC converter in the lateral direction, and
the inverter is positioned behind the electric motor and opposed to the DC/DC converter in the lateral direction.

2. The dump truck according to claim 1, further comprising a DC reactor configured to smooth the current discharged from the battery, and
the DC reactor is positioned in front of the DC/DC converter.

3. The dump truck according to claim 1,
the vehicle body frame has a left frame and a right frame that extend in the longitudinal direction while being spaced apart in the lateral direction, and
the battery, boost reactor, electric motor, and inverter are arranged in the longitudinal direction between the left frame and the right frame.

4. The dump truck according to claim 3, wherein between the battery and the boost reactor, and between the electric motor and the inverter, each is connected via cables extending in the longitudinal direction between the left frame and the right frame.

5. The dump truck according to claim 4, wherein between the DC/DC converter and the boost reactor, and between the DC/DC converter and the inverter, each is connected via cables extending in the lateral direction through the underside of the vehicle body frame.
